# EUROPEAN PATENT APPLICATION

(11) **EP 4 678 621 A1**
(43) Date of publication of application: **14.01.2026**
(21) Application number: 25187646.2
(22) Date of filing: 04.07.2025
(51) Int. Cl.: C04B 41/50, C04B 41/00, C04B 41/52, C04B 41/89, C23C 16/40, C23C 18/12, C23C 28/00, F01D 5/28, C23C 4/134, C04B 111/00

(54) **COATING SYSTEM WITH ALKALINE EARTH OXIDES**

(30) Priority: 08.07.2024 US 202418765491
(71) Applicant: General Electric Company, Cincinnati, Ohio 45215 (US)
(72) Inventor: NAYAK, Mohandas, 560066 Bengaluru (IN); KESHAVAN, Hrishikesh, 560066 Bengaluru (IN); CHAKRABORTY, Soumya, 560066 Bengaluru (IN); S, Vipin, 560066 Bengaluru (IN); WALLACE, Margeaux, Niskayuna, 12309-1027 (US); KUHN, Julie Marie, Evendale, 45215-1988 (US)
(74) Representative: Openshaw & Co.

(57) **Abstract**

A coating system [16], along with its methods of formation, are provided. The coating system [16] may be disposed on a surface [14] of a substrate [16]. The coating system [16] may include: a bondcoat [18] on the surface [14] of the substrate [16]; a thermal barrier coating [20] on the bondcoat [18] defining a plurality of elongated surface-connected voids [22]; and a protective composition [24] disposed within at least some of the plurality of elongated surface-connected voids [22] of the thermal barrier coating [20]. The protective composition [24] may include an oxide or a mixture of oxides, with the oxide or the mixture of oxides including an alkaline earth element and at least one of aluminum, gallium, or a combination of aluminum and gallium.

## Description

### FIELD

This disclosure generally relates to articles having thermal barrier coatings thereon. More particularly, this disclosure relates to articles employing coatings that are resistant to degradation due to high-temperature interactions with dust materials.

### BACKGROUND

Thermal barrier coatings are typically used in articles that operate at or are exposed to high temperatures. Aviation turbines and land-based turbines, for example, may include one or more components protected by the thermal barrier coatings. Under normal conditions of operation, coated components may be susceptible to various types of damage, including erosion, oxidation, and attack from environmental contaminants.

For turbine components, environmental contaminant compositions of particular concern are those containing oxides of calcium, magnesium, aluminum, silicon, and mixtures thereof; dirt, ash, and dust ingested by gas turbine engines, for instance, are often made up of such compounds. These oxides often combine to form contaminant compositions comprising mixed calcium-magnesium-aluminum-silicon-oxide systems (Ca-Mg-Al-Si-O), hereafter referred to as "CMAS."

### BRIEF DESCRIPTION OF THE DRAWINGS

A full and enabling disclosure of the present embodiments, including the best mode thereof, directed to one of ordinary skill in the art, is set forth in the specification, which makes reference to the appended Figs., in which:
FIG. 1 is a schematic cross-section illustrating an exemplary article according to one embodiment of the present disclosure;
FIG. 2 is a schematic cross-section illustrating an exemplary article according to one embodiment of the present disclosure; and
FIG. 3 shows a schematic diagram of an exemplary method of forming a coating system of an article, such as shown in FIGS. 1 and 2, according to one embodiment of the present disclosure.

Repeat use of reference characters in the present specification and drawings is intended to represent the same or analogous features or elements of the present disclosure.

### DEFINITIONS

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

As used herein, the term "coating" refers to a material disposed on at least a portion of an underlying surface in a continuous or discontinuous manner. Further, the term "coating" does not necessarily mean a uniform thickness of the disposed material, and the disposed material may have a uniform or a variable thickness. The term "coating" may refer to a single layer of the coating material or may refer to a plurality of layers of the coating material. The coating material may be the same or different in the plurality of layers.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

As used herein, the terms "rare-earth" and "rare-earth element" are used interchangeably, and encompass elements of the lanthanide series, yttrium, and scandium. More specifically, rare earth elements include scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

As used herein, "alumina" refers to an aluminum oxide, such as in the form of Al₂O₃, which may also be represented as AlO_{1.5}.

As used herein, "gallium oxide" refers to an oxide of gallium, such as in the form of Ga₂O₃, which may also be represented as GaO_{1.5}.

As used herein, "alkaline earth oxide" refers to an oxide of an alkaline earth element, such as BeO, calcia (CaO), magnesia (MgO), BaO, or a mixture thereof.

As used herein, "silica" refers to silicon oxide in the form of SiO₂. Conversely, "elemental silicon" refers to silicon without any alloying materials present, outside of incidental impurities. It is sometimes referred to in the art as "silicon metal." Elemental silicon has a melting point of about 1414° C.

As used herein, the term "substantially free" is understood to mean completely free of said constituent, or inclusive of trace amounts of same. "Trace amounts" are those quantitative levels of chemical constituent that are barely detectable and provide no benefit to the functional or aesthetic properties of the subject composition.

As used herein, "nominal CMAS" refers to the following composition, with all percentages in mole percent: 41.6% silica (SiO₂), 29.3% calcia (CaO), 12.5% alumina (AlO_{1.5}), 9.1% magnesia (MgO), 6.0% iron oxide (FeO_{1.5}), and 1.5% nickel oxide (NiO). It will be appreciated that the nominal CMAS composition given in this definition represents a reference composition to define a benchmark for a substance's CMAS reactivity in a way that can be compared to the CMAS reactivity of other substances; use of this reference composition does not limit in any way the actual composition of ingested material (i.e., CMAS) that becomes deposited on the coating during operation which, of course, will vary widely in service.

As used herein, the term "aspect ratio" of an object (e.g., a void, a particle, etc) refers to the length of the largest caliper diameter of the object divided by the length of the smallest caliper diameter of that same object. For example, a circular object would have an equal length all around the particle, and thus would have an aspect ratio of 1. In another example, an object having a caliper diameter in its largest dimension of 100 micrometers (µm) and a caliper diameter in its smallest dimension of 10 µm would have an aspect ratio of 10 (i.e., 100 µm divided by 10 µm is 10). It is noted that the aspect ratio is agnostic to measurement units, as the formula cancels out the particular units utilized to measure the length, as long as the measuring units are the same.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

At the high turbine operating temperatures, environmental contaminants can adhere to the hot thermal barrier coating surface and cause damage to the thermal barrier coating. For example, CMAS can form compositions that are liquid or molten at the operating temperatures of the turbines. The molten CMAS composition can dissolve the thermal barrier coating or can fill its porous structure by infiltrating the pores, channels, cracks, or other cavities in the coating. Upon cooling, the infiltrated CMAS composition solidifies and reduces the strain tolerance of the coating, thus initiating and propagating cracks that may cause delamination and spalling of the coating material. This may further result in partial or complete loss of the thermal protection provided to the underlying metal substrate of the part or component. Further, spallation of the thermal barrier coating may create hot spots in the metal substrate leading to premature component failure. Premature component failure can lead to unscheduled maintenance as well as parts replacement resulting in reduced performance, and increased operating and servicing costs.

Thus, there is a need for improved coating systems that provide protection to thermal barrier coatings from the adverse effects of environmental contaminants, when operated at or exposed to high temperatures. **In** particular, there is a need for improved coating systems, and methods for making such coatings, that provide protection from the adverse effects of deposited CMAS.

A coating system is generally provided to protect underlying material (e.g., underlying coating and/or surfaces) from undesired chemical interactions. The coating system generally includes a bondcoat, a thermal barrier coating (TBC), and a protective composition infiltrated into elongated surface-connected voids of the thermal barrier coating. The protective composition helps protect the underlying TBC and bondcoat, and particularly any thermally grown oxide on the bondcoat, from CMAS attack, from reactive particle attack, or reactive layer attack. The protective composition is particularly useful within coating systems that include a thermal barrier coating defining a plurality of elongated surface-connected voids, such as cracks and porosity that allow access for environmental contaminants to the interior of coating, which provides a path for CMAS attack, reactive particle attack, or a reactive layer attack.

The protective composition is designed to be highly reactive to CMAS-type material, such that, at typical temperatures where CMAS is encountered in liquid form, the protective composition rapidly reacts with the CMAS to form a solid reaction product that itself is thermally and chemically stable in the presence of liquid CMAS, forming a solid-phase barrier against further CMAS ingress.

Not only is the protective composition reactive with CMAS material, but also the protective coating forms reaction products with the CMAS that are sufficiently stable at operating temperatures (e.g., at 1200°C or higher) so as to inhibit the formation of large clusters that bridge opposite sides of the surface-connected voids so that closing of such voids is inhibited. Particular embodiments of the protective composition, along with coating systems that include such a protective composition, are discussed in greater detail below.

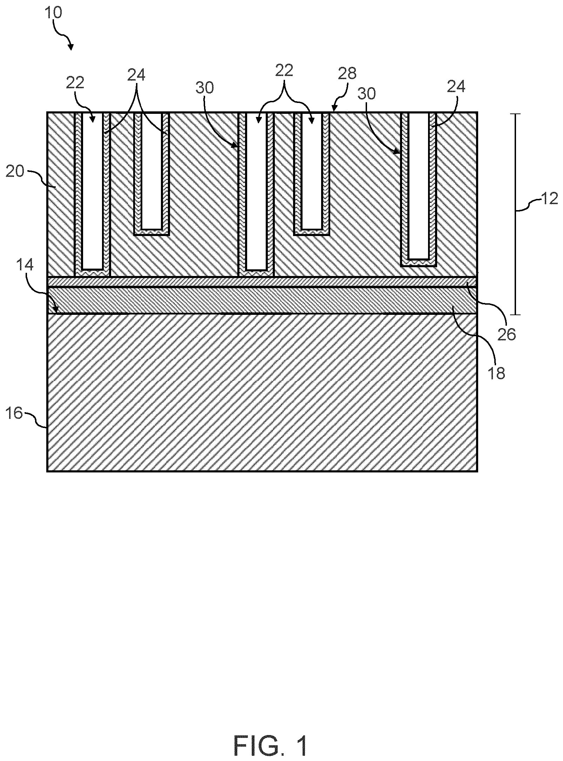

Referring to FIG. 1, an article 10 is generally shown including a coating system 12 disposed on a surface 14 of a substrate 16. The coating system 12 generally includes a bondcoat 18 on the surface 14 and a thermal barrier coating 20 (TBC) on the bondcoat 18. The TBC 20 generally defines a plurality of elongated surface-connected voids 22, with a protective composition 24 disposed within at least some of the voids of the TBC 20. Each of these layers are discussed in greater detail below.

As shown in FIG. 1, the bondcoat 18 is disposed between the substrate 16 and the TBC 20 in some embodiments. Bondcoat 18 provides functionality (adhesion promotion and oxidation resistance, for example) similar to what such coatings generally provide in conventional applications. In some embodiments, bondcoat 18 comprises an aluminide, such as nickel aluminide or platinum aluminide, or a MCrAlY-type coating where M is Ni, Co, Fe, or combinations thereof. These bondcoats 18 may be especially useful when applied to a metallic substrate 16, such as a substrate 16 comprising a superalloy. These coatings may be applied using any of various coating techniques known in the art, such as plasma spray, thermal spray, chemical vapor deposition, ion plasma deposition, vapor phase aluminide or physical vapor deposition.

The bondcoat 18 may have a thickness of about 2.5 µm to about 400 µm and may be applied as an additive layer to the substrate 16 or may be diffused into the substrate 16 giving an inhomogeneous composition which is engineered to have a gradient in properties. However, it is noted that all coating layers within the coating system 12 can vary in thickness depending on location on the part.

A thermally grown oxide (TGO) layer 26 is shown on the bondcoat 18, positioned between the bondcoat 18 and the TBC 20. Generally, the TGO layer 26 includes an oxide of the material of the bondcoat 18. For example, when the bondcoat 18 includes silicon in its construction, the TGO layer 26 may include a silicon oxide (e.g., silicon dioxide, etc.). Similarly, when the bondcoat 18 includes aluminum in its construction, the TGO layer 26 may include an aluminum oxide (e.g., Al₂O, AlO, Al₂O₃, etc., or mixtures thereof).

In certain embodiments, the TGO layer 26 generally has a thickness of up to about 20 µm (e.g., about 0.01 µm to about 6 µm) and can be a natural product of thermal exposures during processing of subsequent layers or can be designed to be thicker by heat treating the part. The TGO layer 26 may not be uniform dependent on the underlying bondcoat 18, processing methods, and exposure conditions.

Referring again to FIG. 1, the TBC 20 is disposed on the bondcoat 18 (over the TGO layer 26, if present) and on the substrate 16. The TBC 20 defines surface-connected voids 22, such as cracks and porosity, that allow access for environmental contaminants to the interior of the coating system 12. Typically, the surface-connected voids 22 of highest interest are elongated. That is, the surface-connected voids 22 have an aspect ratio that is greater than 1 (e.g., greater than 10) and are often oriented such that contaminants entering the void can be conducted into the cross-sectional thickness of the TBC 20. In some embodiments, surface-connected voids 22 include substantially perpendicularly oriented to the surface 14 of the substrate 16 (e.g., substantially vertically oriented from the perspective of a cross-sectional view shown in FIG. 1) cracks and/or boundaries of grains or other microstructural features. These surface-connected voids 22 may be present due to inherent characteristics of deposition processes used to deposit the TBC 20; some surface-connected voids 22 may also form after deposition due to normal wear and tear during operation.

The TBC 20 may be applied by any technique suitable for a given application. TBCs that are deposited by air plasma spray techniques, for instance, may result in a sponge-like porous structure of open pores in at least the outer surface 28 of the TBC 20. Under certain deposition conditions, well developed, vertically oriented (relative to the plane of the substrate 16/coating interface) surface-connected voids 22, in the form of surface-connected cracks, are also formed by plasma spraying thermal barrier coating materials. Similarly, TBCs that are deposited by physical- or chemical- vapor deposition techniques may result in a structure including a series of surface-connected voids 22, in the form of columnar grooves, crevices or channels, in at least the outer surface 28 of the TBC 20. A porous structure, especially (though not exclusively) a structure incorporating vertically oriented and/or columnar features as noted above, may be one of the factors that provides for strain tolerance by the TBC 20 during thermal cycling. Further, the porous structure may provide for stress reduction due to the differences between the coefficient of thermal expansion (CTE) of the TBC 20 and the CTE of the underlying bondcoat 18, substrate 16, or both.

The TBC 20 generally includes a ceramic thermal barrier material. Suitable ceramic thermal barrier coating materials include various types of oxides, such as hafnium oxide ("hafnia") or zirconium oxide ("zirconia"), in particular stabilized hafnia or stabilized zirconia, and blends including one or both of these. Examples of stabilized zirconia include without limitation yttria-stabilized zirconia, ceria-stabilized zirconia, calcia-stabilized zirconia, scandia-stabilized zirconia, magnesia-stabilized zirconia, india-stabilized zirconia, ytterbia-stabilized zirconia, lanthana-stabilized zirconia, gadolinia-stabilized zirconia, as well as mixtures of such stabilized zirconia. Similar stabilized hafnia compositions are known in the art and suitable for use in embodiments described herein.

In certain embodiments, TBC 20 includes yttria-stabilized zirconia. Suitable yttria-stabilized zirconia may include from about 1 weight percent to about 20 weight percent yttria (based on the combined weight of yttria and zirconia), and more typically from about 3 weight percent to about 10 weight percent yttria. An example yttria-stabilized zirconia thermal barrier coating includes about 7% yttria and about 93% zirconia. These types of zirconia may further include one or more of a second metal (e.g., a lanthanide or actinide) oxide, such as dysprosia, erbia, europia, gadolinia, neodymia, praseodymia, urania, and hafnia, to further reduce thermal conductivity of the thermal barrier coating material. In some embodiments, the thermal barrier coating material may further include an additional metal oxide, such as titania.

Suitable ceramic thermal barrier coating materials may also include pyrochlores of general formula A₂B₂O₇ where A is a metal having a valence of 3+ or 2+ (e.g., gadolinium, aluminum, cerium, lanthanum or yttrium) and B is a metal having a valence of 4+ or 5+ (e.g., hafnium, titanium, cerium or zirconium) where the sum of the A and B valences is 7. Representative materials of this type include gadolinium zirconate, lanthanum titanate, lanthanum zirconate, yttrium zirconate, lanthanum hafnate, cerium hafnate, and lanthanum cerate.

The TBC 20 may include the ceramic thermal barrier coating material in an amount of up to 100 weight percent. In some embodiments, the TBC 20 includes the ceramic thermal barrier coating material in a range from about 95 weight percent to about 100 weight percent and more particularly from about 98 weight percent to about 100 weight percent. The selected composition of the TBC 20 may depend upon one or more factors, including the composition of the optional, adjacent bondcoat 18 (if present), the coefficient of thermal expansion (CTE) characteristics desired for the TBC 20, and the thermal barrier properties desired for the TBC 20.

The thickness of the TBC 20 may depend upon the substrate 16 or the component it is deposited on. In some embodiments, the TBC 20 has a thickness in a range of about 25 microns to about 2000 microns, such as about 25 microns to about 1500 microns (e.g., about 25 microns to about 1000 microns).

Referring again to FIG. 1, a protective composition 24 is disposed within at least some of the surface-connected voids 22 of the TBC 20. The protective composition 24 has the characteristics described above with respect to the reactivity of its component substance(s) with CMAS. In some embodiments, such as the illustrative embodiment shown in FIG. 1, the protective composition 24 forms a continuous or substantially continuous structure within surface-connected voids 22. For example, the protective composition 24 may form a protective coating on at least 50% of a surface area of the column walls 30 defining the surface-connected voids 22, such as at least 80% of the surface area. In the embodiment shown, the protective composition 24 may form a protective coating that substantially covers the surface area of the column walls 30.

While other techniques have been described in which material is disposed on internal surfaces of ceramic coatings, for instance to prevent sintering of columnar microstructural features, the present technique involves the disposition of an effective concentration of protective composition 24 to substantially prevent incursion of CMAS, such as the nominal CMAS composition used as a benchmark, above, into voids in which protective composition 24 is disposed. This effective concentration of protective composition 24 will depend in large part on the specific volume of the reaction product formed between CMAS and the protective composition 24, and on the microstructure of protective composition 24. For instance, where the width of voids is comparatively large, or where the volume fraction of voids is comparatively high, the amount of protective composition 24 needed to be effective in stopping incursion of molten CMAS will be higher than in instances where void width and/or void volume fraction is comparatively low. In certain embodiments, at least about 25% by volume of the void fraction (porosity) of TBC 20 is occupied by protective composition 24. **In** some embodiments, the volume fraction of the porosity that is occupied by protective composition 24 is a function of the cross-sectional depth, with a comparatively higher concentrations of agent at or near the coating surface trending to comparatively low concentrations as distance from the coating surface increases (that is, as distance away from substrate 16 decreases). For instance, as an illustrative, non-limiting example, the occupied porosity is at least about 25% by volume at the surface of protective composition 24, trending toward about 5% by volume at a point below the half-thickness of the protective composition 24.

As noted previously, protective composition 24 includes one or more substance that is highly reactive with liquid CMAS and forms a reaction product that is sufficiently stable at operating temperatures so as to inhibit the formation of large clusters that bridge opposite sides of the surface-connected voids 22 so that closing of such surface-connected voids 22 is inhibited. Thus, the surface-connected voids 22 are still able to serve as a stress relief mechanism for the TBC 20 during expansion and contraction within thermal cycles in use, and may help reduce strain caused by any CTE mismatch with the underlying bondcoat 18, substrate 16, or both.

The protective composition 24 includes, though not necessarily exclusively, an oxide or a mixture of oxides, where the oxide or the mixture of oxides comprises an alkaline earth element and at least one of aluminum, gallium, or a combination of aluminum and gallium. Non-limiting examples of suitable alkaline earth elements include beryllium, magnesium, calcium, strontium, barium, or combinations thereof.

**In** particular embodiments, the protective composition 24 is substantially free from a rare earth element, and thus substantially free from rare-earth oxides, rare earth silicates, and the like. That is, the protective composition 24 is, in such an embodiment, substantially free from scandium, yttrium, lanthanum, cerium, gadolinium, praseodymium, neodymium, promethium, samarium, europium, terbium, dysprosium, holmium, erbium, thulium, ytterbium, lutetium, or combinations thereof. Without wishing to be bound by any particular theory, it is believed that the presence of a rare earth element in the protective composition 24 can form undesirable phases in the protective composition 24, TBC or both. That is, it is believed that a rare earth element present in the protective composition 24 would react with components of the TBC to form undesirable cubic phases. Such a reaction renders the protective composition 24 less available for reaction with incoming CMAS, thus reducing the effectiveness of the protective composition 24.

Additionally or alternatively, the protective composition 24 may be substantially free from silica (e.g., SiO₂). Without wishing to be bound by any particular theory, it is believed that the presence of silica in the protective composition 24 does not aid in protecting the TBC from incoming CMAS and would simply occupy space in the protective composition 24 that could otherwise be filled with a useful composition. Thus, by being substantially free from silica (or other nonreactive materials), the protective composition 24 can form a relatively thin layer within the elongated surface-connected voids 22 of the TBC 20.

In some embodiments, the alkaline earth element of the protective composition 24 may be in the form of a salt, such as an alkaline earth oxide. For example, the alkaline earth element may be present in the protective coating in the form of MO, wherein M includes at least one alkaline earth metal, such as MgO, CaO, or a mixture thereof. Additionally or alternatively, the alkaline earth element of the protective composition 24 may be in the form of a salt that includes MZr₄(PO₄)₆, wherein M includes at least one alkaline earth metal. As noted earlier, M may include beryllium, magnesium, calcium, strontium, barium, or combinations thereof. In certain embodiments, the CMAS-reactive material includes CaₓSr₁₋ₓZr₄(PO₄)₆, wherein x is a number from 0 to 1. In certain embodiments, the CMAS-reactive material includes CaZr₄(PO₄)₆, SrZr₄(PO₄)₆, Ca_{0.5}Sr_{0.5}Zr₄(PO₄)₆, or combinations thereof. Each of these three compositions may form stable solid reaction products such as a phosphate that may provide desirable barrier behavior when formed within voids of TBC 20. In one embodiment, the protective coating may include at least two alkaline earth oxides that are different from each other.

In addition to the alkaline earth element (in whatever chemical form), the protective composition 24 also includes at least one of aluminum, gallium, or a combination of aluminum and gallium. For example, the at least one of aluminum, gallium, or a combination of aluminum and gallium may be in the form of Al₂₋ₓGaₓO₃ where x is 0 to 2 or an alkaline earth oxide that includes the at least one of aluminum, gallium, or a combination of aluminum and gallium. For instance, the protective composition 24 may include alumina (i.e., when x is 0), gallium oxide (i.e., when x is 2), or a combination of alumina and gallium oxide (e.g., Al₂₋ₓGaₓO₃ where x is greater than 0 to less than 2). For example, x may be 0 to 1 such that the oxide includes aluminum, and in certain embodiments may be 0 to less than 1 such that the oxide includes more aluminum than gallium (if present). In one embodiment, x may be greater than 0 to 1 such that the oxide includes a combination of aluminum and gallium.

The protective composition 24 may include an oxide compound comprising the alkaline earth element and at least one of aluminum, gallium, or a combination of aluminum and gallium, such as MgAl₂O₄, MgO-MgAl₂O₄ solid solution, or combinations thereof.

The relative amounts of the alkaline earth element to the at least one of aluminum, gallium, or a combination of aluminum and gallium may be controlled in the protective coating to adjust properties as desired. It is noted that gallium oxide has higher density (hence less molar volume), while alumina and MgO are more refractory. Without wishing to be bound by any particular theory, it is believed that the low molar volume for the same mole of reactant fills less space in-between the column hence providing for relatively low modulus. It is also believed that the higher refractoriness (high melting point) reduces column bridging, which also correlates to relatively low modulus.

For example, when the protective composition 24 comprises the mixture of oxides, the mixture may include an alkaline earth oxide and Al₂₋ₓGaₓO₃ where x is 0 to 2, with the protective composition 24 comprises 5 wt% to 85 wt% of the Al₂₋ₓGaₓO₃, such as 10 wt% to 75 wt% of the Al₂₋ₓGaₓO₃. The protective composition 24 may include the alkaline earth oxide in various weight ratios to the Al₂₋ₓGaₓO₃ compound, depending on the particular compounds present. Table 1 shows combinations of an exemplary alkaline earth oxide in various weight ratios with exemplary compounds of Al₂₋ₓGaₓO₃:

**Table 1**

| **alkaline earth oxide:Al₂₋ₓGaₓO₃** | **Molar ratio** | **Wt. % ratio** |
|---|---|---|
| MgO:Ga₂O₃ | 1:2 | 10:90 |
| | 2:1 | 29:71 |
| MgO:Al₂O₃ | 1:2 | 16:84 |
| | 2:1 | 44:56 |
| MgO:AlGaO₃ | 1:2 | 12:88 |
| | 2:1 | 35:65 |
| MgO:Al_{1.5}Ga_{0.5}O₃ | 1:2 | 14:86 |
| | 2:1 | 38:62 |
| MgO:Al_{0.5}Ga_{1.5}O₃ | 1:2 | 11:89 |
| | 2:1 | 32:68 |

The protective composition 24 may be distributed within surface-connected coating voids 22 as described previously, and in the context of embodiments involving multiple layers of the TBC 20.

One potential advantage of the technique described herein is that it allows the use of an outermost layer of the TBC 20, that has desirable wear, erosion, thermal, or other properties, while disposing a CMAS reactive material (i.e., protective composition 24) in the places throughout the thickness of the TBC 20 (e.g., outer and inner portions of the voids). Many of the materials that are highly reactive with CMAS lack suitable levels of mechanical properties or other properties to be desirable choices for a bulk coating that is exposed to the ambient service environment of, for instance, a gas turbine. On the other hand, zirconia stabilized with 7%-9% yttria by weight is a very attractive material for use in thermal barrier coatings because of its advantageous thermal and mechanical properties, but its resistance to CMAS is not particularly high. The service life of such a coating material may be enhanced by applying protective composition 24 to vulnerable areas (such as the surface-connected voids 22 as noted herein) without resorting to the use of a bulk topcoat made of a CMAS-resistant material, which may itself be more vulnerable than YSZ to erosion or other degradation mechanism.

A method for making articles, such as article 10 described above, includes disposing protective composition 24 within surface-connected voids 22 of TBC 20, which is positioned on an optional bondcoat 18, at an effective concentration to substantially prevent incursion of CMAS materials, such as nominal CMAS noted above, into the TBC 20.

As noted previously, TBC 20 may be disposed on substrate 16 by any of several different coating techniques, such as plasma spray techniques (for example, air plasma spray using dry or liquid feedstock materials), chemical vapor deposition, physical vapor deposition (for example, electron-beam physical vapor deposition or evaporation), slurry deposition, sol-gel techniques, and other coating methods.

Disposing the protective composition 24 typically involves infiltrating the protective coating as a vapor or liquid into the surface-connected voids 22 of the TBC 20. In the case of a vapor infiltrant, the protective composition 24 may be formed by chemical interaction with the environment within voids such as by reaction with material of TBC 20. Liquid infiltrants, on the other hand, include one or more liquids such as water, or a carbon-bearing liquid such as an alcohol or acetone. In one embodiment involving a liquid infiltrant, the liquid includes a carrier fluid and a plurality of particles suspended within the carrier fluid. The particles may comprise the protective composition 24, or may be a chemical precursor to the protective composition 24, designed to further react during processing or during service to produce the protective composition 24. In an alternative embodiment, the liquid includes a solvent, with a solute dissolved in the solvent. The solute may be a precursor of the protective composition 24, such as a nitrate, sulfate, other salt, or other compound type, and the solvent is selected to appropriately accommodate the desired solute. More than one solute may be dissolved in the solvent. The solute may be reacted to form the protective composition 24, such as by heating to decompose the solute, or by reacting multiple solutes together, or by reacting one or more solute with the material of the TBC 20, or some combination of these.

The liquid infiltrant is infiltrated into the surface-connected voids 22 using any appropriate technique. In some embodiments, the liquid is simply placed in contact with the TBC 20, such as by dipping or brushing, allowing capillary action to draw the liquid and the protective composition 24 (or precursor thereof) into the voids. Vacuum infiltration techniques are applied in some embodiments to further assist in driving liquid into the surface-connected voids 22 of the TBC 20. Other techniques such as electrophoretic deposition may be used in conjunction with a suspension to deposit particles of agent or a precursor of the protective composition 24 into the surface-connected voids 22.

Where a liquid infiltrant is applied, whether the liquid is carrying a suspension of particles or has a solute dissolved in it, in some embodiments the method further includes volatilizing the liquid to form a residue that is disposed in the elongated surface-connected voids 22. The residue may be a precursor to the protective composition 24, or it may be the protective composition 24 itself. Volatilizing is typically done by heating the infiltrated coating to a temperature where the liquid is driven off at an acceptable rate. Often the heating rate ("ramp-rate") to attain the desired temperature for volatilization is controlled to avoid building up undue pressure within the TBC 20, which could damage the TBC 20 and/or could result in incomplete deposition of protective composition 24 due to liquid being forced out by rapid bubble formation and escape.

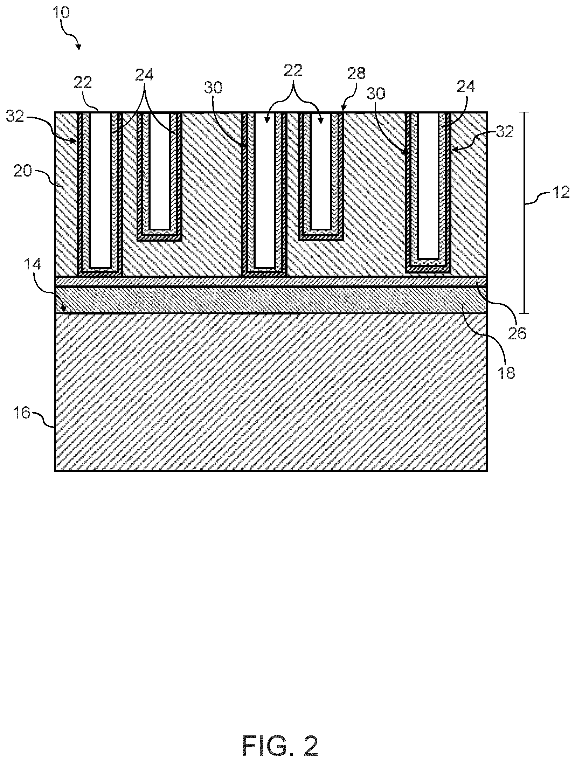

In the embodiment of FIG. 1, the protective composition 24 is directly on the column walls 30 of the TBC 20. However, in another embodiment such as shown in FIG. 2, a barrier layer 32 may be positioned within the elongated surface-connected voids 22 to be between the protective composition 24 and the column walls 30 of the TBC 20. For example, the barrier layer 32 may be a relatively thin barrier layer 32 of a barrier material that may inhibit or prevent reaction of CMAS with a rare earth element in the TBC 20 and with compositions of the bondcoat 18. In particular embodiments, the barrier layer 32 may have a thickness that is about 1% to about 20% of the total thickness of the TBC 20. The barrier layer 32 may be particularly effective in elongated surface-connected voids 22 that extend to the bondcoat 18 or the substrate 16. In such elongated surface-connected voids 22, the barrier layer 32 may substantially separate the protective composition 24 from the bondcoat 18 or, if no bondcoat 18 is present, from substrate 16. Thus, the barrier layer 32 is interposed between the substrate 16 and the protective composition 24. Without wishing to be bound by any particular theory, it is believed that the barrier layer 32 substantially prevents chemical interaction between the protective composition 24 and a TGO layer 26 disposed on substrate 16 or, if present, bondcoat 18.

In some embodiments, the barrier material comprises alumina, cerium oxide, yttrium oxide, zirconium oxide, hafnium oxide, tantalum oxide, niobium oxide, titanium oxide, or combinations thereof. Some of these oxides may, where appropriate, include a sufficient amount of stabilizer (often a rare earth element) to reduce the propensity of the oxide to undergo stress-generating phase transformations during heat-up and cool-down, but the amount of rare-earth stabilizer should be sufficiently small to mitigate issues of reactivity with the TGO layer 26. The upper limit of rare-earth stabilizer content depends on the particular element being used and the identity of the barrier maters; for example, rare earth bearing aluminate garnets tend not to dissolve alumina, and thus may contain higher amounts of rare earth material without deleterious interaction with TGO layer 26. In some embodiments, the barrier material comprises less than 40 atomic percent rare earth element content, such as less than 10 atomic percent rare earth element content, for example as found in the commonly used zirconia stabilized with 8 mole percent yttria ("8YSZ"). The barrier material need not be as reactive with CMAS as protective composition 24 because it is typically separated from contact with CMAS by protective composition 24; the function of barrier material, then is primarily to physically separate the protective composition 24 from bondcoat 18 and/or substrate 16.

In one particular embodiment, the barrier material of the barrier layer 32 may be, Al₂₋ₓGaₓO₃ where x is 0 to 2, such as alumina, gallium oxide, an aluminum-gallium oxide, or a mixture thereof. In one embodiment, the barrier material may be substantially free from an alkaline earth oxide when deposited. The barrier layer 32 may be formed, in one embodiment, as an infiltrant as described above with respect to the protective composition 24.

The coating system 12 is generally disposed on a surface 14 of the substrate 16 to form an article 10. In particular embodiments, the article 10 may be any component that is subject to service in a high-temperature environment, such as a component of a gas turbine assembly. Examples of such components include, but are not limited to, components that include turbine airfoils such as blades and vanes, and combustion components such as liners and transition pieces. Substrate 16, then, may be any material suitable for use in such applications; examples include nickel-base superalloys, cobalt-base superalloys, and ceramic matrix composites, to name a few.

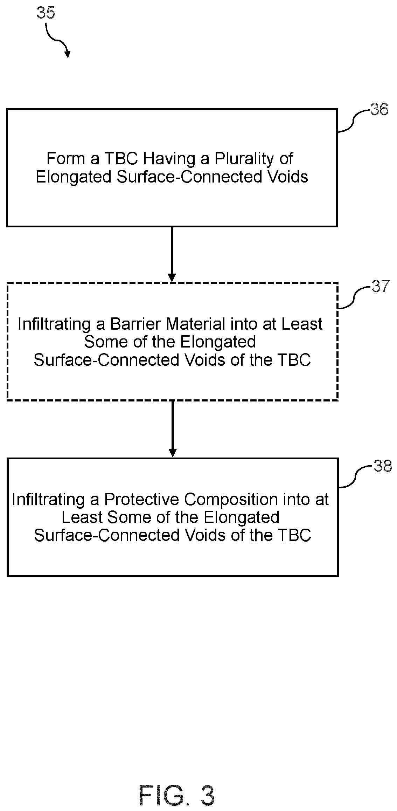

FIG. 3 shows a schematic diagram of an exemplary method 35 of forming a coating system of an article, such as shown in FIGS. 1 and 2. At 36, a TBC may be formed on a substrate (e.g., over a bondcoat) in a manner such that the TBC has a plurality of elongated surface-connected voids defined therein. At 37, a barrier material may be optionally infiltrated into at least some of the elongated surface-connected voids of the TBC. At 38, a protective composition may be infiltrated into at least some of the elongated surface-connected voids of the TBC.

Further aspects are provided by the subject matter of the following clauses:
A coating system disposed on a surface of a substrate, the coating system comprising: a bondcoat on the surface of the substrate; a thermal barrier coating on the bondcoat, wherein the thermal barrier coating defines a plurality of elongated surface-connected voids; and a protective composition disposed within at least some of the plurality of elongated surface-connected voids of the thermal barrier coating, wherein the protective composition comprises an oxide or a mixture of oxides, wherein the oxide or the mixture of oxides comprises an alkaline earth element and at least one of aluminum, gallium, or a combination of aluminum and gallium.

The coating system as in any preceding clause, wherein the protective composition is substantially free from a rare earth element.

The coating system as in any preceding clause, wherein the protective composition is substantially free from silica.

The coating system as in any preceding clause, wherein the alkaline earth element comprises magnesium, calcium, strontium, or a mixture thereof.

The coating system as in any preceding clause, wherein the protective composition comprises the mixture of oxides, wherein the mixture of oxides comprises an alkaline earth oxide and Al₂₋ₓGaₓO₃ where x is 0 to 2.

The coating system as in any preceding clause, wherein the protective composition comprises 5 wt% to 85 wt% of the Al₂₋ₓGaₓO₃ where x is 0 to 2.

The coating system as in any preceding clause, wherein the protective composition comprises 10 wt% to 75 wt% of the Al₂₋ₓGaₓO₃ where x is 0 to 2.

The coating system as in any preceding clause, wherein the protective composition comprises the alkaline earth oxide in a molar ratio to Al₂₋ₓGaₓO₃ that is 1:2 to 2:1.

The coating system as in any preceding clause, wherein x is 0 to 1.

The coating system as in any preceding clause, wherein x is less than 1.

The coating system as in any preceding clause, wherein x is 0.

The coating system as in any preceding clause, wherein x is greater than 0 to 1.

The coating system as in any preceding clause, wherein the alkaline earth oxide comprises MgO, CaO, or a mixture thereof.

The coating system as in any preceding clause, wherein the protective composition comprises at least two alkaline earth oxides and Al₂₋ₓGaₓO₃ where x is 0 to 2, wherein the at least two alkaline earth oxides are different from each other.

The coating system as in any preceding clause, wherein the protective composition comprises an oxide compound comprising the alkaline earth element and at least one of aluminum, gallium, or a combination of aluminum and gallium.

The coating system as in any preceding clause, wherein each of the elongated surface-connected voids are defined by column walls of the thermal barrier coating, and wherein the protective composition forms a coating on at least 50% of a surface area of the column walls defining each of the plurality of elongated surface-connected voids.

The coating system as in any preceding clause, further comprising: a barrier layer disposed on the column walls of each of the plurality of elongated surface-connected voids of the thermal barrier coating, wherein the barrier layer is positioned between the thermal barrier coating and the protective composition.

The coating system as in any preceding clause, wherein the barrier layer comprises alumina.

A coated component having the coating system of any preceding clause.

A method of making the coating system as in any preceding clause.

A method of forming a coating system, the method comprising: forming a thermal barrier coating on a bondcoat on a surface of a substrate, wherein the thermal barrier coating defines a plurality of elongated surface-connected voids; and infiltrating a protective composition into at least some of the plurality of elongated surface-connected voids of the thermal barrier coating, wherein the protective composition comprises an oxide or mixture of oxides, wherein the oxide or mixture of oxides comprises an alkaline earth element and at least one of aluminum, gallium, or a combination of aluminum and gallium.

The method of any preceding clause, further comprising: prior to infiltrating the protective composition into at least some of the plurality of elongated surface-connected voids of the thermal barrier coating, infiltrating a barrier material into at least some of the plurality of elongated surface-connected voids of the thermal barrier coating to form a barrier layer positioned between the thermal barrier coating and the protective composition.

The method of any preceding clause, wherein the protective composition is substantially free from a rare earth element, substantially free from silica, or substantially free from both a rare earth element and from silica.

The method of any preceding clause, wherein the alkaline earth element comprises magnesium, calcium, strontium, or a mixture thereof.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A coating system [12] disposed on a surface [14] of a substrate [16], the coating system [12] comprising:
a bondcoat [18] on the surface [14] of the substrate [16];
a thermal barrier coating [20] on the bondcoat [18], wherein the thermal barrier coating [20] defines a plurality of elongated surface-connected voids [22]; and
a protective composition [24] disposed within at least some of the plurality of elongated surface-connected voids [22] of the thermal barrier coating [20], wherein the protective composition [24] comprises an oxide or a mixture of oxides, wherein the oxide or the mixture of oxides comprises an alkaline earth element and at least one of aluminum, gallium, or a combination of aluminum and gallium.

2. The coating system [12] as in claim 1, wherein the protective composition [24] is substantially free from a rare earth element, substantially free from silica, or substantially free from both a rare earth element and from silica.

3. The coating system [12] as in any preceding claim, wherein the alkaline earth element comprises magnesium, calcium, strontium, or a mixture thereof.

4. The coating system [12] as in any preceding claim, wherein the protective composition [24] comprises the mixture of oxides, wherein the mixture of oxides comprises an alkaline earth oxide and Al₂₋ₓGₐxO₃ where x is 0 to 2.

5. The coating system [12] as in claim 5, wherein the protective composition [24] comprises 5 wt% to 85 wt% of the Al₂₋ₓGaₓO₃ where x is 0 to 2.

6. The coating system [12] as in claim 4 or 5, wherein the protective composition [24] comprises the alkaline earth oxide in a molar ratio to Al₂₋ₓGaₓO₃ that is 1:2 to 2:1.

7. The coating system [12] as in any of claims 4-6, wherein the alkaline earth oxide comprises MgO, CaO, or a mixture thereof.

8. The coating system [12] as in claim any of claims 4-7, wherein the protective composition [24] comprises at least two alkaline earth oxides and Al₂₋ₓGaₓO₃ where x is 0 to 2, wherein the at least two alkaline earth oxides are different from each other.

9. The coating system [12] as in any preceding claim, wherein the protective composition [24] comprises an oxide compound comprising the alkaline earth element and at least one of aluminum, gallium, or a combination of aluminum and gallium.

10. The coating system [12] as in any preceding claim, wherein each of the plurality of elongated surface-connected voids [22] are defined by column walls [30] of the thermal barrier coating [20], and wherein the protective composition [24] forms a coating on at least 50% of a surface area of the column walls [30] defining each of the plurality of elongated surface-connected voids [22].

11. The coating system [12] as in claim 10, further comprising:
a barrier layer [32] disposed on the vertical walls [30] of each of the plurality of elongated surface-connected voids [22] of the thermal barrier coating [20], wherein the barrier layer [32] is positioned between the thermal barrier coating [20] and the protective composition [24].

12. The coating system [12] as in claim 11, wherein the barrier layer [32] comprises alumina.

13. A method of forming a coating system [12], the method comprising:
forming a thermal barrier coating [20] on a bondcoat [18] on a surface [14] of a substrate [16], wherein the thermal barrier coating [20] defines a plurality of elongated surface-connected voids [22]; and
infiltrating a protective composition [24] into at least some of the plurality of elongated surface-connected voids [22] of the thermal barrier coating [20], wherein the protective composition [24] comprises an oxide or mixture of oxides, wherein the oxide or mixture of oxides comprises an alkaline earth element and at least one of aluminum, gallium, or a combination of aluminum and gallium.

14. The method of claim 13, further comprising:
prior to infiltrating the protective composition [24] into at least some of the plurality of elongated surface-connected voids [22] of the thermal barrier coating [20], infiltrating a barrier material into at least some of the plurality of elongated surface-connected voids [22] of the thermal barrier coating [20] to form a barrier layer [32] positioned between the thermal barrier coating [20] and the protective composition [24].

15. The method of claim 13 or 14, wherein the protective composition [24] is substantially free from a rare earth element, substantially free from silica, or substantially free from both a rare earth element and from silica, and wherein the alkaline earth element comprises magnesium, calcium, strontium, or a mixture thereof.
